(19) Europäisches Patentamt

European Patent Office

Office européen des brevets

(11) Veröffentlichungsnummer: **0 310 051 B1**

(12) **EUROPÄISCHE PATENTSCHRIFT**

(45) Veröffentlichungstag der Patentschrift: **17.06.92**

(21) Anmeldenummer: **88116038.6**

(22) Anmeldetag: **29.09.88**

(51) Int. Cl.⁵: **C08L 25/02**, C08L 23/06,
//(C08L25/02,23:06,53:02),
(C08L23/06,25:02,53:02)

(54) Thermoplastische Formmasse, deren Herstellung und ihre Verwendung.

(30) Priorität: **02.10.87 DE 3733342**

(43) Veröffentlichungstag der Anmeldung:
**05.04.89 Patentblatt 89/14**

(45) Bekanntmachung des Hinweises auf die
Patenterteilung:
**17.06.92 Patentblatt 92/25**

(84) Benannte Vertragsstaaten:
**BE DE FR GB IT**

(56) Entgegenhaltungen:
**EP-A- 0 060 525**

**CHEMICAL ABSTRACTS, Band 104, Nr. 2, 13. Januar 1986, Seite 39, Zusammenfassung Nr. 6700r, Columbus, Ohio, US**

(73) Patentinhaber: **BASF Aktiengesellschaft
Carl-Bosch-Strasse 38
W-6700 Ludwigshafen(DE)**

(72) Erfinder: **Hoenl, Hans, Dr.
Hauptstrasse 69 a
W-6719 Obersuelzen(DE)**
Erfinder: **Jenne, Helmut, Dr.
Grosser Moench 6
W-6905 Schriesheim(DE)**
Erfinder: **Matern, Ruediger
Uferstrasse 5
W-6804 Ilvesheim(DE)**
Erfinder: **Moedersheim, Norbert
Taunusstrasse 3
W-6710 Frankenthal 4(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine thermoplastische Formmasse, enthaltend, jeweils bezogen auf die Summe aus A + B + C,

A mindestens 30 Gew.% mindestens eines Styrol oder ein substituiertes Styrol enthaltenden Polymerisates,

B mindestens 30 Gew.% Polyethylen und

C 1 bis 20 Gew.% eines durch anionische Polymerisation unter Kopplung erzeugtes Sternblockcopolymerisates aus Styrol und Butadien.

Zum Stand der Technik wird genannt:

(1) EP 4 685 und
(2) EP 60 525.

Der Zusatz von Mischungsvermittlern zu Polystyrol-Polyethylen-Mischungen zur Verbesserung von Produkteigenschaften ist bekannt. So werden hydrierte SBS-Blockcopolymere für diesen Zweck beschrieben (vgl. (1)). Auch $S(DS)_n$-Blockcopolymere sollen sich als Mischungsvermittler für Polystyrol-Polyethylen-Mischungen bewähren (vgl. (2)); hierbei bedeutet D entweder Isopren oder Butadien, wobei im letzteren Fall das Blockcopolymere in hydrierter Form vorliegen soll.

Die vorstehend beschriebenen Mischungen haben immer noch Nachteile in Bezug auf Schlagzähigkeit und Steifigkeit.

Es bestand daher die Aufgabe für Lebensmittelverpackungen Formmassen zu entwickeln, die eine bessere Spannungsrißbeständigkeit und eine geringere Wasserdampfdurchlässigkeit als schlagfestes Polystyrol besitzen sollten. Weiterhin sollte die Verarbeitbarkeit beim Tiefziehen besser sein als bei Polyethylen.

Diese Aufgabe wird gelöst durch eine Formmasse, bei der als Sternblockcopolymerisat ein solches verwendet wird, das bezogen auf C aufgebaut ist aus 55 bis 90 Gew.% Styrol und 45 bis 10 Gew.% Butadien und eine mittlere Sternastzahl von 3 bis 12 aufweist.

Die Erfindung betrifft somit eine thermoplastische Formmasse, enthaltend, jeweils bezogen auf die Summe aus A + B + C,

A mindestens 30 Gew.% mindestens eines Styrol oder ein substituiertes Styrol enthaltenden Polymerisates,

B mindestens 30 Gew.% Polyethylen und

C 1 bis 20 Gew.% eines durch anionische Polymerisation unter Kopplung erzeugtes Sternblockcopolymerisates aus Styrol und Butadien.

Sie ist dadurch gekennzeichnet, daß als Sternblockcopolymerisat ein solches verwendet wird, das bezogen auf C, aufgebaut ist aus 55 bis 90 Gew.% Styrol und 45 bis 10 Gew.% Butadien und eine mittlere Sternastzahl von 3 bis 12 aufweist.

Nachstehend werden der Aufbau der erfindungsgemäßen Formmasse aus den Komponenten, die Herstellung der Komponenten und die der Formmasse beschrieben.

Die Formmasse enthält die Komponenten A, B und C; vorzugsweise besteht sie aus diesen.

Ferner kann die Formmasse als Komponente D übliche Zusatzstoffe enthalten.

Bezogen auf die Formmasse aus A + B + C enthält sie:

A: 30 bis etwa 70 Gew.%, vorzugsweise 35 bis 60 Gew.%

B: 30 bis etwa 70 Gew.%, vorzugsweise 35 bis 60 Gew.%

C: 1 bis 20 gew.%, vorzugsweise 2 bis 14 Gew.%.

Bezogen auf 100 Gew.Teile A + B + C, können zugegeben sein

D: 0,05 bis 25 Gew.Teile, insbesondere 0,1 bis 10 Gew.Teile.

Komponente A

Als Komponente A der erfindungsgemäßen Formmasse kommen Homopolymerisate oder Copolymerisate von Styrol mit einem der eng verwandten insbesondere methylsubstituierten Styrole in Frage, in denen ein Methylrest als Substituent am aromatischen Ring oder an der Seitenkette vorhanden ist. Hier sind vor allem p-Methylstyrol oder α-Methylstyrol zu erwähnen. Diese Copolymerisate können aus Styrol bzw. substituiertem Styrol in an sich bekannter Weise hergestellt werden. Als Styrolpolymerisate kommen ferner

2

Pfropfmischpolymerisate in Frage, die durch Polymerisation von Styrol oder substituiertem Styrol in Gegenwart eines Kautschuk, z.B. eines Butadienpolymerisates oder kautschukartigen Styrol/Butadien-Polymerisats, hergestellt werden. Der Polybutadiengehalt kann 3bis 20 Gew.%, vorzugsweise 5 bis 12 Gew.%, bezogen auf A, betragen. Der mit Styrol gepfropfte Kautschuk (Weichphase) liegt dabei fein dispergiert in einer als Hartmatrix bezeichneten Polystyrolphase vor. Die Herstellung derartiger schlagfester Polystyrole ist dem Fachmann bekannt. Polystyrole und Polymerisate substituierter Styrole sind, ebenso wie die schlagfesten Polystyrole, im Handel erhältlich. Die Viskositätszahl der Komponente A soll im Bereich von 60 bis 120 ml/g, gemessen in 0,5 %iger Lösung in Toluol bei 23 °C liegen.

Komponente B

Als Polyethylen sind Polymerisate des Ethylens oder Copolymerisate des Ethylens, die Ethylen im deutlichen Überschuß enthalten, zu verstehen. Vorzugsweise werden Polyethylene hoher Dichte (HDPE) angewendet (Bereich 0,94 bis 0,97 g/cm$^3$), die einen Schmelzindex HFI (190/2.16) im Bereich von 0,1 bis 80 g/10 min. (DIN 53 7351 aufweisen. Die Herstellung derartiger Produkte ist bekannt (vgl. Ullmanns Encyclopädie der techn. Chemie Bd 10, Seiten 167-226, 4. Auflage 19801.

Komponente C

Als Kommponente C kommen ganz allgemein an sich bekannte, durch anionische Polymerisation mit lithiumorganischen Verbindungen in organischen Lösungsmitteln hergestellte verzweigte Blockcopolymerisate in Betracht, die aus Styrol und Butadien aufgebaut sind. Ein (Teil)Ersatz von Butadien durch Isopren ist möglich. Die Blockcopolymerisate weisen in der Regel Styrolgehalte von 55 bis 90 Gew.%, vorzugsweise von 55 bis 80 Gew.% und insbesondere von 60 bis 80 Gew.% auf (Rest Butadien und/oder Isopren) bei Viskositätszahlen, VZ, von 50 bis 130 [ml/g], vorzugsweise von 65 bis 96 [ml/g] und insbesondere von 70 bis 90 [ml/g] (gemessen 0,5 %ig in Toluol bei 23 °C).

Die verzweigten Blockcopolymerisate werden in an sich bekannter Weise aus den linearen Blockcopolymerisaten, insbesondere dem "living Anion" durch Kopplung mit multifunktionellen Kopplungsmitteln erzeugt, wobei je nach der Funktionalität des Kopplungsmittels und Ausbeute im Mittel 3 bis 12 Sternäste entstehen. Art und Umfang der Kopplung können mittels GPC-Analyse (Molgewichtsbestimmung) , gegebenenfalls unter Abbau, ermittelt werden.

Verzweigte Sternblockcopolymerisate und deren Herstellung sind z.B. in der US-PS 3 281 383 bzw. der GB-PS 985 614 beschrieben. Polymodal aufgebaute verzweigte Blockcopolymerisate sind aus der DE-OS 19 59 922 bekannt. Schließlich sind andersartige, verzweigte Blockcopolymerisate in der DE-OS 25 50 227 beschrieben. Die Kopplungsreaktion zur Herstellung verzweigter Blockcopolymerisate verläuft nicht quantitativ, so daß die verzweigten Blockcopolymerisate aus komplexen Mischungen linearer und verzweigter Blockcopolymerisate bestehen können. Im Sinne der vorliegenden Erfindung sollen jedoch die Umsetzungsprodukte der Kopplung inklusive der ungekoppelten Anteile als verzweigte Blockcopolymerisate verstanden werden. Bevorzugt werden verzweigte Blockcopolymerisate angewendet, die nach der Lehre der DE-OS 19 59 922 und insbesondere nach der Lehre der DE-OS 25 50 227 (mit verschmierten Übergängen zwischen den Blöcken) hergestellt worden sind und die ein mittels GPC bestimmtes Molgewicht von 100 000 bis 300 000, bei einer Sternastzahl von 3-5, aufweisen. Besonders bevorzugt sind polymodal aufgebaute Blockcopolymerisate, deren einzelne Sternäste jeweils Styrol-Butadien-Blockcopolymerisate mit nur scharfen Übergängen zwischen den Blöcken (aus Styrol und Butadien) oder mit sogenannten verschmierten Übergängen zwischen den Blöcken aufweisen.

Komponente D

Die erfindungsgemäße Formmasse kann als Komponente D übliche Zusatzstoffe in Mengen von 0,05 bis 50 gew.-Teilen, bezogen auf 100 Teile A + B + C, enthalten, die für die Komponenten A, B und C typisch und gebräuchlich sind. Als solche Zusatzstoffe seien beispielsweise genannt: Füllstoffe, Farbstoffe, Pigmente, Antistatika, Antioxidantien, auch Flammschutzmittel und insbesondere die Schmiermittel, die für die Weiterverarbeitung der Formmasse, z.B. bei der Herstellung von Formkörpern bzw. Formteilen, erforderlich sind.

Herstellung der Formmasse

Die Herstellung der Formmasse erfolgt durch Mischen der Komponenten A, B, C und gegebenenfalls D nach allen bekannten Methoden. Vorzugsweise geschieht jedoch das Mischen der Komponenten A, B und C durch gemeinsames Extrudieren, Kneten und Verwalzen der Komponenten bei höheren Temperaturen, z.B. in der Schmelze, in einem Ein- oder Zweiwellenextruder, wobei die Zusatzstoffe D auch in einer Komponente, z.B. A, B oder C, eingebracht werden können.

Die erfindungsgemäße Formmasse kann nach den bekannten Verfahren der Thermoplastverarbeitung verarbeitet werden, also z.B. durch Extrudieren, Spritzgießen, Kalandrieren, Hohlkörperblasen, Pressen oder Sintern: besonders bevorzugt werden aus den nach dem erfindungsgemävßen Verfahren hergestellten Formmassen Folien durch Extrusion hergestellt.

Die in der vorliegenden Anmeldung beschriebenen Parameter werden wie folgt bestimmt:

1. Lochkerbschlagzähigkeit, LKSZ, nach DIN 53 753 in $(kJ/m^2)$

2. Streckspannung, SS, Reißfestigkeit, RF, Reißdehnung, RD, Elastizitätsmodul, EM, nach DIN 53 455 in $(N/mm^2)$

3. Vicat A und 8 nach DIN 53 460

4. Spannungsrißbeständigkeit nach DIN 53 449 Teil 3: relative Reißdehnung nach 50' Kontakt mit Speiseöl RD/50

5. Wasserdampfdurchlässigkeit nach DIN 53 122: WDD

6. Verarbeitbarkeit beim Tiefziehen. Beim Tiefziehen sind für das Beispiel und die Vergleichsversuche praktisch gleich gute Werte erhalten worden.

Für die Herstellung erfindungsgemäßer Formmassen und von Vergleichsmassen werden die nachfolgend beschriebenen Produkte verwendet.

Komponente A

A ein schlagfestes Polystyrol mit einem Polybutadiengehalt von 7,9 Gew.%, mittlere Teilchengröße der Weichphase 2,7 μm (Mittelwert: 50 Volumenprozent der als Weichphase vorliegenden Kautschukpartikel liegen oberhalb dieses Wertes und 50 Volumenprozent unterhalb dieses Wertes) enthaltend 0,12 Gew.% eines sterisch gehinderten Phenols als Antioxydans und 2,3 Gew.% Weißöl als Schmiermittel, VZ der Hartmatrix 70 ml/g.

Komponente B

B HDPE der BASF AG: ®Lupolen 6031 M (Dichte = 0,964 $g/cm^3$ nach DIN 53 479; MFI (190, 2,16) = 8,0 g/10 min. nach DIN 53 7351

Komponente C

C$_1$: Ein polymodal aufgebautes Sternblockcopolymer mit ca. 75 Gew.% Styrol gemäß der Lehre des DE-OS 25 50 227 hergestellt: ®Styrolux 684 D der BASF AG.

C$_2$: Ein SIS-Sternblockcopolymeres mit ca. 14 Gew.% Styrol entsprechend Bsp. 1 der EP-PS 60 525: ®Cariflex TR 1107 der Shell AG.

C$_3$: Ein hydriertes SBS-Sternblockcopolymeres mit ca. 29 Gew.% Styrol entsprechend Bsp. 2 der EP-PS 60 525: ®Kraton G 1652 der Shell AG.

Komponente D

Die Komponente D wurde in der Komponente A eingebracht, wobei als Antioxydans ein sterisch gehindertes Phenol (®Irganox 107,6) verwendet und als Schmiermittel ein medizinisches Weißöl, DAB 6, benutzt wurde.

Die Erfindung wird durch das nachfolgende Beispiel und die Vergleichsversuche näher erläutert. Die darin genannten Teile und Prozente beziehen sich, sofern nicht anders angegeben, auf das Gewicht.

Beispiel und Vergleichsversuche I bis III

Es wurden jeweils 47,5 Gew.% der Komponente A und 47,5 Gew.% der Komponente B mit 5 Gew.% der in der Tabelle angegebenen Komponenten C$_1$ bis C$_3$ in trockener Form gemischt und auf einer ZSK 30 bei 230°C und 210 UpM compoundiert. Der Ausstoß betrug 20 kg/h. Aus dem Granulat der Proben wurden die Formmassen für die Eigenschaftsprüfungen durch Pressen hergestellt. Die entsprechenden Kenndaten sind in der nachfolgenden Tabelle wiedergegeben.

| | | Beispiel | Vergleichsversuch | | |
|---|---|---|---|---|---|
| | | | I | II | III |
| Komponente C | | | | | |
| Art | | $C_1$ | $C_2$ | $C_3$ | – |
| LKSZ | $kJ/m^2$ | 24 | 12 | 14 | 3 |
| SS | $N/mm^2$ | 25 | 13 | 20 | 20 |
| RF | $N/mm^2$ | 25 | 12 | 20 | 20 |
| RD | % | 18 | 15 | 11 | 2 |
| EM | $N/mm^2$ | 1220 | 630 | 820 | 1250 |
| Vicat A | °C | 107 | 105 | 106 | 107 |
| Vicat B | °C | 77 | 64 | 66 | 76 |
| RD/50 | % | 120 | 106 | 88 | 101 |
| WDD | $g/m^2 \cdot d$ | 2,0 | 2,5 | 2,7 | 3,1 |

**Patentansprüche**

1. Thermoplastische Formmasse, enthaltend, jeweils bezogen auf die Summe aus A + B + C,
A mindestens 30 Gew.% mindestens eines Styrol oder ein substituiertes Styrol enthaltenden Polymerisates,
B mindestens 30 Gew.% Polyethylen und
C 1 bis 20 Gew.% eines durch anionische Polymerisation unter Kopplung erzeugtes Sternblockcopolymerisates aus Styrol und Butadien, dadurch gekennzeichnet, daß als Sternblockcopolymerisat ein solches verwendet wird, das bezogen auf C aufgebaut ist aus 55 bis 90 Gew.% Styrol und 45 bis 10 Gew.% Butadien und eine mittlere Sternastzahl von 3 bis 12 aufweist.

2. Thermoplastische Formmasse nach Anspruch 1, bestehend aus den Komponenten A, B und C.

3. Thermoplastische Formmasse nach Anspruch 1 oder 2, dadurch gekennzeichnet, daß Komponente B ein Polyethylen hoher Dichte im Bereich von 0,94 bis $0,97/cm^3$ (HDPE) ist.

4. Thermoplastische Formmasse nach Anspruch 1, 2 oder 3, dadurch gekennzeichnet, daß das mittels GPC bestimmte Molekulargewicht von C 100 000 bis 300 000 bei einer Sternastzahl von 3 bis 5 beträgt.

5. Thermoplastische Formmasse nach einem der Ansprüche 1 bis 4, enthaltend, bezogen auf 100 Teile A + B + C, 0,05 bis 50 Gew.Teile übliche Zusatzstoffe (Komponente D).

6. Thermoplastische Formmasse nach einem der Ansprüche 1 bis 5, dadurch gekennzeichnet, daß das Sternblockcopolymerisat polymodal aufgebaut ist und die einzelnen Sternäste jeweils Styrol-Butadien-Blockcopolymerisate mit nur scharfen Übergängen zwischen den Blöcken (aus Styrol und Butadien) oder mit sogenannten verschmierten Übergängen zwischen den Blöcken aufweisen.

7. Thermoplastische Formmasse nach Ansprüchen 1 bis 6, dadurch gekennzeichnet, daß das Polymerisat A schlagfestes Polystyrol ist.

8. Verwendung der thermoplastischen Formmasse gemäß Ansprüchen 1 bis 6 zur Herstellung von Formteilen.

**Claims**

5

EP 0 310 051 B1

1. A thermoplastic molding material containing, based in each case on the sum of A + B + C,
   A not less than 30% by weight of one or more polymers containing styrene or a substituted styrene,
   B not less than 30% by weight of polyethylene and
   C from 1 to 20% by weight of a star block copolymer produced by anionic polymerization with coupling and consisting of styrene and butadiene, wherein the star block copolymer used is one which is composed of from 55 to 90% by weight of styrene and from 45 to 10% by weight of butadiene, the percentages being based on C, and has an average number of star branches of from 3 to 12.

2. A thermoplastic molding material as claimed in claim 1, consisting of components A, B and C.

3. A thermoplastic molding material as claimed in claim 1 or 2, wherein component B is a high density polyethylene (HDPE) having a density of from 0.94 to 0.97 g/cm$^3$.

4. A thermoplastic molding material as claimed in claim 1, 2 or 3, wherein the molecular weight of C, determined by means of GPC, is from 100,000 to 300,000, the number of star branches being from 3 to 5.

5. A thermoplastic molding material as claimed in any of claims 1 to 4, containing from 0.05 to 50 parts by weight, based on 100 parts of A + B + C, of conventional additives (component D).

6. A thermoplastic molding material as claimed in any of claims 1 to 5, wherein the star block copolymer is polymodal and the individual star branches each contain styrene/butadiene block copolymers having only well defined transitions between the blocks (of styrene and butadiene) or having tapered transitions between the blocks.

7. A thermoplastic molding material as claimed in any of claims 1 to 6, wherein the polymer A is high impact polystyrene.

8. Use of a thermoplastic molding material as claimed in any of claims 1 to 6 for the production of moldings.

**Revendications**

1. Masse à mouler thermoplastique contenant, chaque fois par rapport à la somme de A + B + C,
   A au moins 30 % en poids d'au moins un polymère contenant du styrol ou un styrol substitué,
   B au moins 30 % en poids de polyéthylène et
   C 1 à 20 % en poids d'un copolymère séquencé étoilé de styrol et de butadiène, produit par polymérisation anionique avec couplage, caractérisée par l'emploi, comme copolymère séquencé étoilé, d'un tel copolymère qui est constitué, par rapport à C, de 55 à 90 % en poids de styrol et de 45 à 10 % en poids de butadiène et qui présente un indice moyen de branches étoilées de 3 à 12.

2. Masse à mouler thermoplastique suivant la revendication 1, consistant en les composants A, B et C.

3. Masse à mouler thermoplastique suivant la revendication 1 ou 2, caractérisée en ce que le composant a est un polyéthylène de densité élevée comprise dans le domaine de 0,94 à 0,97 g/cm$^3$ (HDPE).

4. Masse à mouler thermoplastique suivant l'une quelconque des revendications 1, 2 et 3, caractérisée en ce que le poids moléculaire de C, déterminé par chromatographie en phase gazeuse, est de 100 000 à 300 000 pour un indice de branches étoilées de 3 à 5.

5. Masse à mouler thermoplastique suivant l'une quelconque des revendications 1 à 4, contenant, par rapport à 100 parties de A + B + C, 0,05 à 50 parties en poids des additifs usuels (composant D).

6. Masse à mouler thermoplastique suivant l'une quelconque des revendications 1 à 5, caractérisée en ce que le copolymère séquencé étoilé est constitué d'une façon polymodale et en ce que les branches étoilées individuelles présentent chacune des copolymères séquencés styrol-butadiène avec seulement des jonctions nettes entre les blocs (de styrol et de butadiène) ou avec des jonctions dites empâtées entre les blocs.

7. Masse à mouler thermoplastique suivant l'une quelconque des revendications 1 à 6, caractérisée en ce que le polymère A est du polystyrène résistant au choc.

8. Utilisation de la masse à mouler thermoplastique suivant l'une quelconque des revendications 1 à 6 pour la fabrication de pièces moulées.

7